(19) Europäisches Patentamt
European Patent Office
Office européen des brevets

(11) EP 3 330 927 A1

(12) EUROPEAN PATENT APPLICATION

(43) Date of publication:
06.06.2018 Bulletin 2018/23

(51) Int Cl.:
G06T 17/20 (2006.01)    G06T 19/20 (2011.01)

(21) Application number: 16306615.2

(22) Date of filing: 05.12.2016

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(71) Applicant: THOMSON Licensing
92130 Issy-les-Moulineaux (FR)

(72) Inventors:
• VARANASI, Kiran
35576 Cesson Sévigné (FR)

• LE CLERC, François
35576 Cesson Sévigné (FR)
• AHN, Junghyun
35576 Cesson Sévigné (FR)
• BURGOS, Xavier
08009 Barcelona (ES)
• DENIS, Bernard
35576 Cesson Sévigné (FR)

(74) Representative: Huchet, Anne et al
TECHNICOLOR
1-5, rue Jeanne d'Arc
92130 Issy-les-Moulineaux (FR)

(54) **METHOD AND APPARATUS FOR SCULPTING A 3D MODEL**

(57) A method and an apparatus for sculpting a template 3D model are disclosed. Such a method comprises receiving (12) a deformation to be applied to the template 3D model. In response to the received deformation, at least one action (13) is executed on at least the template 3D model or a reference 3D model. Such an action uses a set of dependency data defined between the reference 3D model and the template 3D model such that a user sculpting the template 3D model is guided during the modeling process.

FIG. 1

EP 3 330 927 A1

**Description**

## 1. TECHNICAL FIELD

A method and an apparatus for sculpting a 3D model are disclosed.

## 2. BACKGROUND ART

There are several publicly available software tools for 3D modeling, such as Autodesk™ Maya. These software applications typically provide a variety of 3D modeling brushes in order to add or remove 3D volume to shapes and craft surface geometric details, including fine-scale ones. They can carve the 3D shape as if it were a lump of clay.

Modeling artists learn how to use these tools and gain expertise in sculpting geometrically and artistically desired shape features.

Typically, though not always, the artists use a visual reference such as a photograph or a 3D scan and try to replicate this required geometric detail on a given 3D mesh object. For example, a 3D mesh may show a generic human facial template on which the artist needs to sculpt fine-scale geometric detail that is specific to an actor in a given pose. Currently, this is done manually by most artists through simple visual inspection of the reference photograph or 3D scan.

However, the exploited brushes are often agnostic on the model being sculpted. The same brushes are used whether the model being sculpted is the face of an avatar, the model of a house, or a space-ship. Because of such generality of the brushes, the artist needs to be extremely careful when using the brushes to sculpt a specific geometric detail that has semantic meaning, e.g. the wrinkles on the face of an actor. Any exaggeration while using the brush will destroy the plausibility of the facial detail. This is even more challenging, if the artist needs to model a specific facial expression of a known actor. Then, the artist needs to pay attention to very subtle details that are not easily visible under simple visual inspection.

In fact, most often, the sculpted 3D models on such simple interfaces lack the visual quality and fidelity of a professional 3D studio, even in situations where the user is modeling a known 3D object, such as a human face.

In all such cases, where the artist is working on a semantically meaningful geometric detail, such as a facial expression, when the modeling brushes are used by novice or unexperienced artists, the sculpted 3D model may present artefacts. Therefore, available software tools for 3D modeling remain essentially reserved for professional uses by skilled experts.

Furthermore, as such, the brushes are unusable in simpler settings for use by novice or unexperienced artists. For instance, 3D modeling may be unusable by applications running on a mobile device with touch screen interactions, or may lead to unsatisfactory results.

## 3. SUMMARY

A method for sculpting a template 3D model is disclosed. Such a method comprises receiving a deformation to be applied to the template 3D model and in response to the received deformation, executing at least one action on at least the template 3D model or a reference 3D model, the at least one action using a set of dependency data defined between the reference 3D model and the template 3D model.

The present principle relies on a method for artistic 3D mesh sculpting using a reference 3D model obtained for instance from a 3D scan. According to present principle, the artist starts from a template model lacking geometric detail and gradually adds detail that is visible in the scan.

According to the present principle, the template 3D model can be sculpted while taking into account interrelations between the template 3D model being edited and a reference 3D model. Thus, such interrelations are under the form of a set of dependency data and are derived from the reference 3D model. The interrelations between the template 3D model being edited and the reference 3D model can be used to guide an unexperienced user when sculpting a template 3D model. The sculpting operations are safer and simpler.

According to the present principle, seasoned artists can possibly obtain a quite helpful support for simplifying even most complex modeling actions, while unexperienced artists can be significantly supported in an automatic way. Even non-professional users, notably prosumers, can potentially obtain satisfying creative outputs.

According to an embodiment of the present disclosure, the method for sculpting a template 3D model further comprises determining the set of dependency data between the reference 3D model and the template 3D model.

According to another embodiment of the present disclosure, the template 3D model and the reference 3D model are 3D meshes.

According to another embodiment of the present disclosure, determining a set of dependency data comprises:

- assigning point correspondences between the reference 3D model and the template 3D model,

- generating dense surface correspondence between the reference 3D model and the template 3D model using said assigned point correspondences,
- computing the set of dependency data using at least the dense surface correspondence.

According to another embodiment of the present disclosure, executing the at least one action comprises applying the deformation to the template 3D model and outputting an information representative of a geometric difference between the template 3D model and the reference 3D model, such a geometric difference being determined using the set of dependency data.

According to another embodiment of the present disclosure, outputting an information corresponds to displaying a visual feedback on the template 3D model or the reference 3D model, while the artist is working on this procedure. This embodiment allows providing the user with a visual feedback of the deformation s/he is applying to the template 3D model being edited.

According to another embodiment of the present disclosure, the geometric difference is computed as a geometric error metric, and a color map representative of computed values of the geometric error metric provides visual feedback. According to this embodiment, interactive feedback is provided during the sculpting process in terms of color-coded difference with respect to the reference 3D model.

According to another embodiment of the present disclosure, the visual feedback is displayed as a 3D relief structure rendered on the template 3D model, such a 3D relief structure being representative of vertices for the reference 3D model transferred to the template 3D model using the set of dependency data. According to this embodiment, interactive feedback is provided as a 3D geometric relief structure that is shown on top of the template 3D model, which represents the difference to the 3D reference model.

The present principle is not restricted to just facial modeling. Accurate visual feedback with respect to the fine-scale geometric features such as corners, protrusions and 3D ridges in the reference 3D model is also provided. This allows the artist to focus on the key geometric aspects to sculpt, regardless of the nature of the object being sculpted.

According to another embodiment of the present disclosure, executing the at least one action comprises applying the deformation to the template 3D model using the set of dependency data. This embodiment allows limiting the deformation the user is applying to the template 3D model being edited by taking into account the interrelations determined between the template 3D model and the reference 3D model. This embodiment allows incorporating background semantic knowledge during the 3D modeling of a shape. This background knowledge is described in terms of deformation limits beyond which a local surface patch should not be moved. These limits can be obtained easily in a variety of situations. Such semantic background knowledge may be encoded in terms of a geometric guidance during sculpting.

This embodiment allows avoiding producing artefacts to the template 3D model while the user is sculpting the template 3D model.

According to another embodiment of the present disclosure, applying the deformation to the template 3D model using the set of dependency data comprises determining displacement limits from the set of dependency data and limiting vertices displacement of the template 3D model in function of the displacement limits.

According to another embodiment of the present disclosure, when the deformation leads to vertices of the template 3D model positioned beyond the displacement limits, limiting vertices displacement of the template 3D model comprises redirecting a user applying the deformation to the template 3D model to choose a different deformation. According to this embodiment, a hard constraint is imposed to the displacement of the vertices of the template 3D model. When the deformation applied by the user to the template 3D model leads to vertices positions beyond the displacement limits, the user is invited to choose different target vertices positions. In otherwords, the deformation applied by the user is not allowed, and thus such a deformation is not applied or reproduced on the template 3D model.

According to another embodiment of the present disclosure, when the deformation leads to vertices of the template 3D model positioned beyond the displacement limits, displacement of vertices of the template 3D model is adjusted using a weight parameter applied to the displacement of vertices. According to this embodiment, a soft constraint is imposed to the displacement of the vertices of the template 3D model. When the deformation applied by the user to the template 3D model leads to vertices positions beyond the displacement limits, the vertices positions are adjusted so that the exceeding of the limits is reduced.

According to another embodiment of the present disclosure, the reference 3D model is obtained from a 3D scan of an object.

According to another embodiment of the present disclosure, the reference 3D model is built from at least one photograph of an object.

According to another embodiment of the present disclosure, executing at least one action on at least the template 3D model or the reference 3D model is performed in real time when a user is sculpting the template 3D model.

According to another aspect of the present disclosure, an apparatus for sculpting a template 3D model is disclosed. Such an apparatus comprises:

- means for receiving a deformation to be applied to the template 3D model,
- means for executing at least one action on at least the template 3D model or a reference 3D model, the at least one action using a set of dependency data defined between the reference 3D model and the template 3D model, in response to the deformation received.

According to an embodiment, such an apparatus is a mobile device.

The apparatus is advantageously configured to carry out any of the execution modes of the method for sculpting a template 3D model as disclosed above.

The disclosure also pertains to an apparatus for sculpting a template 3D model, which comprises:

- at least one input adapted to receive a deformation to be applied to the template 3D model,
- at least one processor configured to execute at least one action on at least the template 3D model or a reference 3D model, the at least one action using a set of dependency data defined between the reference 3D model and the template 3D model, in response to the deformation received.

According to one implementation, the different steps of the method for sculpting a 3D model as described here above are implemented by one or more software programs or software module programs comprising software instructions intended for execution by a data processor of an apparatus for sculpting a 3D model, these software instructions being designed to command the execution of the different steps of the method according to the present principles.

A computer program is also disclosed that is capable of being executed by a computer or by a data processor, this program comprising instructions to command the execution of the steps of a method for sculpting a 3D model as mentioned here above.

This program can use any programming language whatsoever and be in the form of source code, object code or intermediate code between source code and object code, such as in a partially compiled form or any other desirable form whatsoever.

The information carrier can be any entity or apparatus whatsoever capable of storing the program. For example, the carrier can comprise a storage means such as a ROM, for example a CD ROM or a microelectronic circuit ROM or again a magnetic recording means, for example a floppy disk or a hard disk drive.

Again, the information carrier can be a transmissible carrier such as an electrical or optical signal, which can be conveyed via an electrical or optical cable, by radio or by other means. The program according to the present principles can be especially uploaded to an Internet type network.

As an alternative, the information carrier can be an integrated circuit into which the program is incorporated, the circuit being adapted to executing or to being used in the execution of the methods in question.

According to one embodiment, the methods/apparatus may be implemented by means of software and/or hardware components. In this respect, the term "module" or "unit" can correspond in this document equally well to a software component and to a hardware component or to a set of hardware and software components.

A software component corresponds to one or more computer programs, one or more sub-programs of a program or more generally to any element of a program or a piece of software capable of implementing a function or a set of functions as described here below for the module concerned. Such a software component is executed by a data processor of a physical entity (terminal, server, etc.) and is capable of accessing hardware resources of this physical entity (memories, recording media, communications buses, input/output electronic boards, user interfaces, etc.).

In the same way, a hardware component corresponds to any element of a hardware unit capable of implementing a function or a set of functions as described here below for the module concerned. It can be a programmable hardware component or a component with an integrated processor for the execution of software, for example an integrated circuit, a smartcard, a memory card, an electronic board for the execution of firmware, etc.

## 4. BRIEF DESCRIPTION OF THE DRAWINGS

Figure 1 illustrates a block diagram for an exemplary method for sculpting a 3D model according to an embodiment of the present disclosure,

Figure 2 illustrates a block diagram for an exemplary method for determining a set of dependency data according to an embodiment of the present disclosure,

Figure 3 illustrates a block diagram for an exemplary method for sculpting a 3D model according to another embodiment of the present disclosure,

Figure 4 illustrates a block diagram for an exemplary method for sculpting a 3D model according to another embodiment of the present disclosure,

Figure 5 illustrates an exemplary apparatus for sculpting a 3D model according to an embodiment of the present disclosure,

Figure 6 illustrates a graphical representation of a function $\Gamma_{a,b}(x)$ for imposing soft constraints to a template 3D model being edited.

## 5. DESCRIPTION OF EMBODIMENTS

The present disclosure regards a tool for 3D modeling, also known as 3D sculpting.

Advantageously, the present principle relies on the use of a reference 3D model, and interrelations between a template 3D model being edited and the reference 3D model. Those interrelations automatically assist the user in the modeling operations.

In a preferred implementation, the reference and template 3D models are preferably 3D meshes. But, the present principle may be applied to any other 3D model representations.

The reference 3D model can correspond, e.g., to the 3D scan of an actor, while the template 3D model is typically a template mesh with a controlled topology and an expression similar to the 3D actor scan.

This 3D scan can be obtained in multiple ways: photometric stereo systems, structured light scanners or image-based 3D reconstruction algorithms that work from facial photographs. There are a variety of such scanners available in the market and the proposed method is applicable to all such scenarios.

The task of the artist is then to change the geometry of the template mesh to match that of the actor scan, while retaining the controlled topology of the template in order, e.g., to maintain consistency with the topology of other meshes used to produce a facial animation. The disclosure is relevant to real or imaginary persons, especially for face sculpting, as well as to any animated object for which generic deformation constraints can be available.

In principle, the present method is used when a user is working on the template 3D model for sculpting the facial geometric detail from a given reference 3D model.

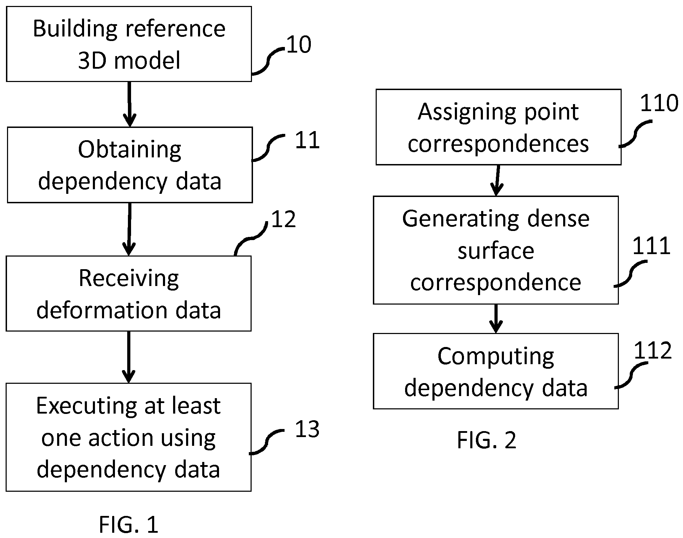

**Figure 1** illustrates a block diagram for an exemplary method for sculpting a 3D model according to an embodiment of the present disclosure.

In step 10, the reference 3D model is built. For instance, in this embodiment, the artist is working from a reference photograph and not a full 3D scan. In this case, a separate 3D reconstruction algorithm is applied for computing an approximate 3D model from the photograph so as to create the reference 3D model. However, step 10 is optional as the reference 3D model may be directly obtained from an existing 3D scan.

In step 11, a set of dependency data is obtained. Such a set of dependency data represents interrelations between the reference 3D model and the template 3D model the user is working on.

According to a variant, the set of dependency data is determined from the reference 3D model and the template 3D model. An exemplary method for determining such a set of dependency data is disclosed below in reference to **figure 2.**

According to another variant, the set of dependency data may be predetermined. For instance, it may be received with the reference 3D model and the template 3D model.

In step 12, deformation data is received. Such deformation data correspond to a deformation the user wishes to apply on the template 3D model during the sculpting or modeling process. Such deformation data may correspond to brushes applied on the template 3D model.

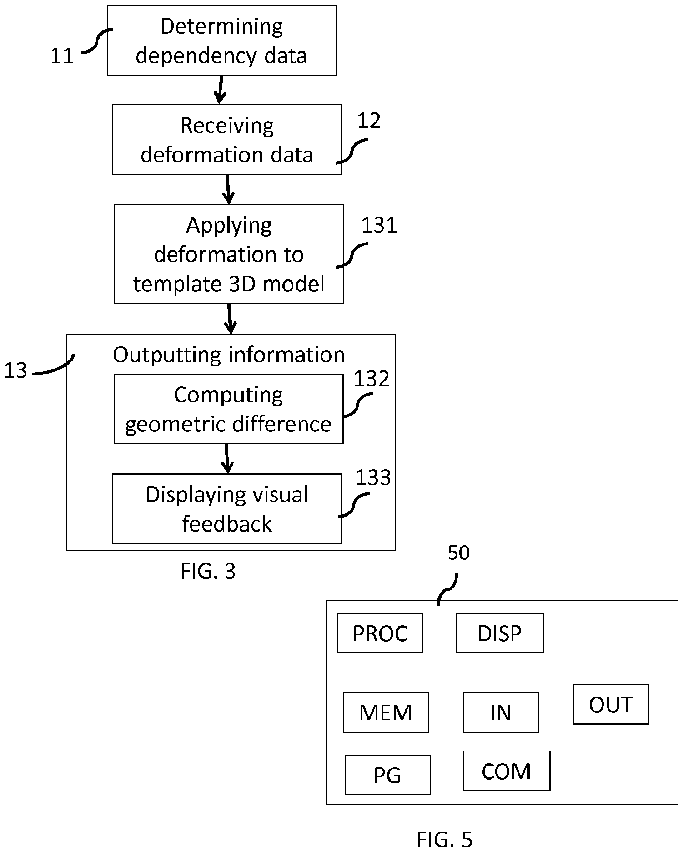

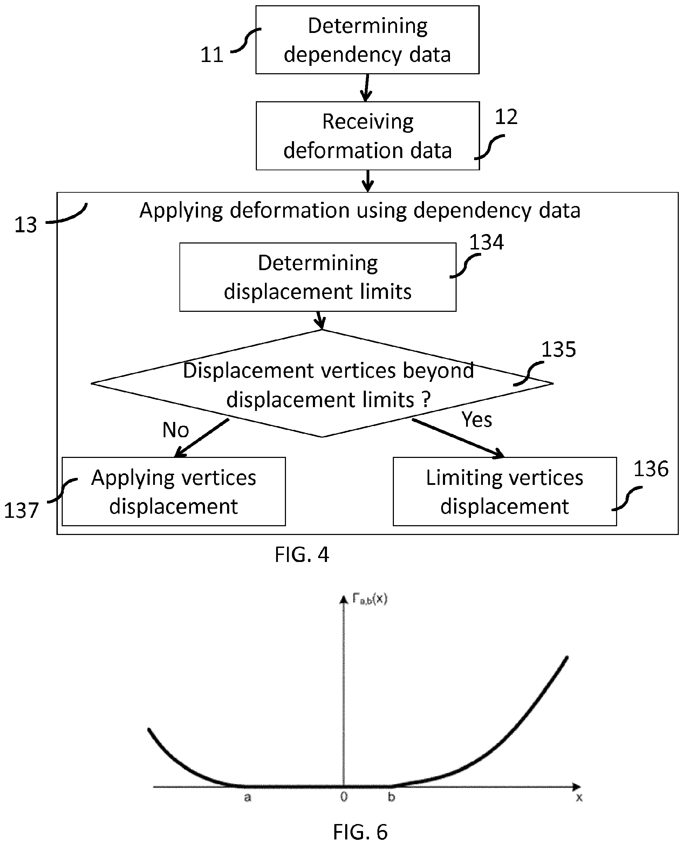

In step 13, in response to the deformation the user wishes to apply on the template 3D model, at least one action is executed using the set of dependency data obtained at step 11 for guiding the user when modeling the template 3D model. Further details for guiding the user when modeling the template 3D model using the set of dependency data are given below in reference to **figures 3 and 4.**

**Figure 2** illustrates a block diagram for an exemplary method for determining a set of dependency data according to an embodiment of the present disclosure.

In step 110, point correspondences are assigned between the reference 3D model (denoted as R) and the template 3D model (denoted as M) whose geometry should match the shape of the reference 3D model after editing.

According to an embodiment, point correspondences between R and M are marked by the user. This may be done by clicking specific point features. For example, if the two meshes are showing faces, the user can visually identify specific facial landmarks such as tips of the mouth and the eyes and tag them on both meshes.

According to a different embodiment, this can be done by an automatic feature detection and matching step. For example, for 3D face modeling using a multi-view image capture and 3D scanning equipment, these facial landmark features can be computed by a computer vision algorithm. Similar feature detection and matching algorithms can be developed for other contexts. The output of step 110 is a sparse set of $k$ correspondences between $R$ and $M$ denoted as paired indices $(cr_i, cm_i)$ for $i = 1$ to $k$.

In step 111, a dense correspondence map between the two meshes is computed using the sparse set of point feature correspondences obtained at step 110. Correspondence densification may be computed as follows. Given a source mesh $S$ and a target mesh $T$, one wants to find for each vertex $v_i^S$ of mesh $S$ the corresponding vertex $v_i^T$ of $T$.

This amounts to finding a set of mappings $\{F_i\}$, each $F_i$ bringing $v_i^S$ to the location of $v_i^T$ Typically, these mappings are computed by minimizing an objective function that ensures:

- that the markers on the source mesh are mapped to their corresponding markers on the target mesh, and
- that the mappings associated to neighboring vertices are close to one another in the sense of a metric defined in the space of mappings, e.g., the Frobenius norm of matrix differences if the mappings $F_i$ are linear and can be represented by matrices.

Thus, the sparse marker correspondences are propagated to the other mesh vertices in a way that guarantees a smooth deformation of the source mesh $\{v_i^S\}$ to the target mesh $\{v^T\}$.

As an example, a dense correspondence computation algorithm is described in section 5 of the paper by R. W. Sumner and J. Popovic entitled "Deformation Transfer for Triangle Meshes", published in Volume 23, issue 3 of the ACM Transactions on Graphics, in 2004.

Such a method may be applied to the reference 3D model R being the source mesh S and the template 3D model $M$ being the target mesh $T$.

In step 112, the set of dependency data is computed as follows.

Given an arbitrary vertex $v_i$ on the working mesh $M$, a geodesic neighborhood $N_\sigma^M$ of the vertex $v_i$ is computed by:

$$N_\sigma^M (\boldsymbol{v}_i) = \{\boldsymbol{v}_j\} \qquad \text{s.t.} \qquad d(\boldsymbol{v}_i, \boldsymbol{v}_j) < \sigma_M \qquad (1)$$

where d (.,.) denotes a surface geodesic distance on $M$ and $\sigma_M$ is a threshold given by the user. A similar geodesic neighborhood $N_\sigma^R$ ($v_{cr(i)}$) can be computed around the corresponding vertex $\boldsymbol{v}_{cr}(i)$ on the reference mesh $R$, using another user-given threshold $\sigma_R$. The thresholds $\sigma_M$ and $\sigma_R$ can be chosen by the user based on a relative proportion of the two meshes $M$ and $R$.

Alternatively, the neighborhoods $N_\sigma^M(v_i)$ and $N_\sigma^R(\boldsymbol{v}_{cr(i)})$ can be painted directly on the surfaces of the template mesh $M$ and reference mesh $R$ using a brush.

Within these two corresponding neighborhoods, a list of $k$ vertex pairs with indices $(j, cr(j))$ in correspondence is defined wherein $\boldsymbol{v}_j$ and $\boldsymbol{v}_{cr(j)}$ are denoted respectively in $M$ and $R$. Two matrices $D_M$ and $D_R$ may be formed. These matrices are of shape $k$ x 3, by stacking the relative positions of the neighbors with respect to the vertex $v_i$, as follows:

$$D_M = [\boldsymbol{v}_j - \boldsymbol{v}_i] \qquad (2)$$

$$D_R = [\boldsymbol{v}_{cr(j)} - \boldsymbol{v}_{cr(i)}] \qquad (3)$$

A linear transformation (warp) $W(\boldsymbol{v}_i)$ between the corresponding regions, represented by a 3 x 3 matrix, can be computed as the minimum norm solution of the linear system $W(\boldsymbol{v}_i).D_R = D_M$ as:

$$W(\boldsymbol{v}_i) = D_M\, D_R^+ \qquad (4)$$

where the 3 $x$ $k$ matrix $D_R^+$ represents the pseudo-inverse of matrix $D_R$. This warp transfers any displacement on the reference mesh $R$ to the local coordinates of the working mesh $M$. Similarly, the inverse of this transformation $W(v_i)^{-1}$ can transfer any displacement on the working mesh $M$ to the local coordinates of the reference mesh $R$.

Given any vertex $v_i$ in $M$, this transformation is applied to the vertices in the reference mesh $R$ that fall within the neighborhood $N_\sigma^R(\boldsymbol{v}_{cr(i)})$ and bring them to the local coordinate frame around $v_i$ in $M$, yielding a transferred geodesic neighborhood

$$TN_\sigma(v_i) = \{W(\boldsymbol{v}_i)\, \boldsymbol{v}_{cr(j)}\} \text{ s.t. } \boldsymbol{v}_{cr(j)} \in N_\sigma^R(\boldsymbol{v}_{cr(i)}). \qquad (5)$$

The vertices in the transferred neighborhood $TN_\sigma(v_i)$ represent the mapping to $M$ of the considered neighborhood of the reference mesh $R$.

The set of dependency data is thus defined as the transferred neighborhood $TN_\sigma(v_i)$ for any vertex $v_i$ of the template mesh $M$.

**Figure 3** illustrates a block diagram for an exemplary method for sculpting a 3D model according to another embodiment of the present disclosure.

According to this embodiment, a visual feedback is provided to the editing artist. The geometric difference between the mapped vertices of the reference 3D model and the edited vertices of the template 3D model $M$ around $\boldsymbol{v}_i$ is visualized.

In step 11, a set of dependency data is determined, for instance according to the method disclosed with reference to **figure 2.**

In step 12, deformation data to apply to the template 3D model is received from the editing user.

In step 131, the deformation is applied to the template 3D model. That is, the vertices of the template 3D model are displaced according to the deformation data received.

In step 13, an information representative of a geometric difference between the template 3D model and the reference 3D model is output to the user, the geometric difference being determined using the set of dependency data.

According to a variant, outputting information representative of the geometric difference between the template 3D model and the reference 3D model to the user comprises displaying a visual feedback on the template 3D model or the reference 3D model.

According to another variant, outputting such information may be performed by an audio signal having a volume that increases with an increase of the geometric difference.

According to an embodiment of the present disclosure, the geometric difference is output as a color coded geometric difference. For this, step 13 comprises computing said geometric difference as a geometric error metric (step 132) to obtain a scalar value for the vertex $v_i$.

In a variant, such a scalar value for the vertex $v_i$ is computed as an average distance of points in $TN_\sigma(v_i)$ to their closest points in the mesh $M$.

*A point to point distance, which is suitable if the mesh resolution in $M$ is large enough, may be computed by:*

$$\lambda(v_i) = \frac{1}{|TN_\sigma(v_i)|} = \sum_{v_j \in TN_\sigma(v_i)} min_{v_k \in N_\sigma(v_i)} dist(\boldsymbol{v}_j, \boldsymbol{v}_k) \qquad (6)$$

where the norm |.| refers to the cardinality of the set $TN_\sigma(v_i)$. Such a distance is only one possible interpretation of the closest distance of a point in $TN_\sigma(v_i)$ to the mesh $M$. A person skilled in the art may replace this by other geometric distances.

In another variant, the scalar function $\lambda(\boldsymbol{v}_i)$ may be computed as the Hausdorff distance between the two sets of vertices in $TN_\sigma(v_i)$ and $N_\sigma(v_i)$. This also produces a scalar value.

According to any one of the variants disclosed above for computing the geometric difference as a scalar value, the resulting scalar value is normalized using a user-defined normalizing factor.

In step 133, the normalized scalar values of the geometric error metric are visualized using a color map. A person who understands the state of the art knows that there are many possible transformations that transfer a scalar value to a coordinate in the RGB color space.

According to a variant, the scalar value is visualized as a color value of vertex $\boldsymbol{v}_i$ in the working mesh $M$ that the artist is editing.

According to another variant the scalar value is visualized as the color value of the corresponding vertex $\boldsymbol{v}_{cr(i)}$ in the reference mesh $R$.

The artist can choose to use either visualizations, which provide interactive feedback during the sculpting process.

According to another embodiment of the present disclosure, the geometric difference is output as a 3D relief structure. According to this embodiment, it is not necessary to compute the geometric difference metric. The geometric difference is directly rendered by the 3D relief structure.

Therefore, in step 133, the transferred reference vertices in $TN_\sigma(v_i)$ are rendered on top of the mesh $M$ so as to guide the artist while s/he is editing the vertex $\boldsymbol{v}_i$. This visualization can be provided as a mesh rendering of the subset of points $TN_\sigma(v_i)$ using the mesh connectivity available from the reference mesh $R$. This yields a set of surface patches (mesh triangles or polygons).

According to a variant, a constant rendering of these surface patches is provided in a semi-transparent manner on top of the working mesh $M$. For example, this can be implemented by adjusting the alpha value of the rendering in OpenGL (also known as Open Graphics Library).

According to another variant, the surface patches are rendered after texturing them with the color information as computed in step 132 as disclosed above.

According to another variant, the surface patches are rendered as a short animation, by animating them from the positions in $TN_\sigma(v_i)$ to their closest points on the mesh $M$.

The user can choose to combine or alternate between any variants of the embodiments disclosed herein.

**Figure 4** illustrates a block diagram for an exemplary method for sculpting a 3D model according to another embodiment of the present disclosure. According to this embodiment, the 3D sculpting of the template 3D model is constrained using semantic constraints.

The semantic constraints are given as predefined deformation limits on the reference 3D model $R$. The embodiment disclosed below allows using these constraints on the template 3D model $M$.

In this way, background semantic knowledge is incorporated during the 3D modeling of a shape. This background knowledge is defined in terms of deformation limits beyond which a local surface patch cannot be moved. These limits can be obtained easily in a variety of situations.

According to an embodiment of the present principle, these limits are set for the modeling of facial expressions on a 3D facial mesh template. These limits are obtained by computing a series of 3 x 3 warps that map local face regions of the mesh being edited to the template of the user.

Once the semantic constraints are in place, the 3D modeling pipeline is modified by restricting the sculpting brushes to produce a 3D model that respects these constraints.

Such an embodiment has several advantages.

By modeling the user intent with respect to the semantics of the 3D modeling in context, an easier interface to produce plausible 3D shapes is provided.

Constraints are incorporated in a generic manner such that the embodiment can be used in a wide variety of 3D modeling contexts.

More precise semantic knowledge can be further incorporated as it gets accumulated in terms of examples of 3D models, such as previously modeled facial and muscle geometry.

More physically based constraints, such as dealing with elasticity or fracture, can be easily converted into position based constraints and incorporated into interactive modeling applications.

Though the description is focused on 3D face modeling, the disclosure is not limited to such applications, and covers other modeling tasks.

According to the embodiment disclosed herein, in step 11, the set of dependency data between the template 3D mesh and the reference 3D mesh is determined, for instance according to the method disclosed with reference to **figure 2.**

In step 12, deformation data to apply to the template 3D model is received from the editing user.

In step 13, the deformation received from the user is applied to the template 3D mesh using the set of dependency data.

For this, in step 134, displacement limits to apply to the vertices of the template 3D mesh are determined.

The semantic constraints from the reference 3D model are defined as vertex-specific displacement limits on the reference mesh $R$. Let $V_R$ be a $3x1$ vector defining the position of a vertex in $R$, and $V'_R$ the displaced position of this same vertex. The displacement limits are measured along a set of $n$ predefined directions in the 3D space, common to all the vertices $V_R$ in $R$ and defined by $n$ $3x1$ directional vectors $d_j$ of unit length.

For vertex $V_R$ and direction $d_j$, the displacement constraints correspond to minimal and maximal values of the projection of the displacement vector on directional vectors $d_j$:

$$(V'_R - V_R).\boldsymbol{d}_j \in [A_j, B_j] \tag{7}$$

where $A_j$ and $B_j$ are scalars defining the displacement limits for the considered vertex, in either direction along vector $\boldsymbol{d}_j$.

The constraints from the reference 3D model are then transferred to the template 3D model to obtain displacement limits to apply to the vertices of the template 3D mesh.

The displacement limits in the template 3D model are obtained from the set of dependency data determined at step 11.

Considering a unit length directional displacement vector $d_j$ defined in the coordinate frame of the reference mesh $R$, the extremal values of the allowed displacement along this direction are defined according to equation (7) as $A_j.\boldsymbol{d}_j$ and $B_j.\boldsymbol{d}_j$. When editing some vertex $\boldsymbol{v}_i$ in $M$, the corresponding extremal displacements are mapped to the local coordinate frame of $M$ around $\boldsymbol{v}_i$ by the warp $W(\boldsymbol{v}_i)$ defined by equation (4) as $W(\boldsymbol{v}_i).(A_j.\boldsymbol{d}_j)$ and $W(\boldsymbol{v}_i).(B_j.\boldsymbol{d}_j)$. The mapped unit length directional vectors on mesh $M$ for vertex $\boldsymbol{v}_i$ are obtained by normalizing the mapped directional vectors to unit length:

$$d_{j,v_i}^M = \frac{W(v_i).d_j}{\|W(v_i).d_j\|} \tag{8}$$

These vectors define the directions of the constraints at vertex $v_i$ on the mesh $M$. The extremal values of the displacement constraints on mesh $M$ at $v_i$ for a given constraint direction $d_j$, corresponding respectively to $A_j$ and $B_j$ on the reference mesh $R$, are computed as the following dot products:

$$\begin{cases} A_{j,v_i}^M = \left[W(v_i).A_j d_j\right] . \, d_{j,v_i}^M \\ B_{j,v_i}^M = \left[W(v_i).B_j d_j\right] . \, d_{j,v_i}^M \end{cases} \tag{9}$$

Given the displacement limits determined for the template 3D model, in step 135, it is checked whether the deformation applied by the user to the template 3D model yields vertices displaced beyond the displacement limits determined at step 134. For instance, if at least one of the displacement limits $W(v_i).(A_j.d_j)$ and $W(v_i).(B_j.d_j)$ along at least one of the directions $d_j$ is exceeded, the answer to the above test is yes.

If the answer is no to the above test, at step 137, the deformation received from the user is applied to the template 3D model as in step 131 disclosed with reference to **figure 3.**

If the answer is yes to the above test, at step 136, the deformation received from the user is applied to the template 3D model but the vertices displacements on the template 3D mesh are limited by imposing the constraints defined above.

According to a variant, a hard constraint is imposed and the user is redirected to choose a different deformation. In other words, the user is redirected to choose a different target position for the vertex $v_i$ being edited.

According to another variant, a soft constraint is imposed by casting the constraint imposition problem into a Laplacian editing framework, following the method described in the paper by O. Sorkine et al. entitled "Laplacian Surface Editing", published in the proceedings of the 2004 Eurographics / ACM SIGGRAPH Symposium on Geometry Processing.

For clarity, the outline of this framework is briefly disclosed below.

Let $V$ be a $Nx3$ matrix containing the coordinates of the $N$ vertices $v_i$ of the edited mesh $M$. The $i^{th}$ row of $V$ is the $1x3$ row vector representing the coordinates of $v_i$ in three-dimensional space.

Let $\Delta$ the discrete Laplace-Beltrami operator for mesh $M$, which is represented by a square $NxN$ matrix $L_M$. The application of this Laplacian operator to the coordinates of the mesh, represented by matrix $V$, produces an $Nx3$ matrix $L_M V$ whose $i^{th}$ line $\delta_i$ expresses, as a $1x3$ row vector, the difference between vertex $v_i$ and its neighbors, which can be interpreted as a local curvature information around $v_i$. In this respect, $L_M V$ encodes the "shape" of the mesh $M$.

When the artist edits the location of a vertex of $M$, say $v_i$, to a new location $v'_i$, one would like the locations of other vertices of the mesh, especially in the neighborhood of $v_i$, to be moved in order to maintain the spatial smoothness of the mesh, while preserving as much as possible the original shape of the mesh before the edit. Let $V^*$ be the $Nx3$ matrix containing the edited locations of the mesh vertices, in the same format as the matrix $V$ containing the original positions. In the Laplacian editing framework, the shape of the mesh is encoded in the Laplacian matrix $L_M$, and the optimally modified mesh accounting for the editing of a set of vertices $\{v_k\}$ is given by:

$$V^* = \arg\min_X [\|L_M X - L_M V\|^2 + \alpha \sum_k \|x_k - v'_k\|^2] \tag{10}$$

In this equation, $x_k$ represents the $k^{th}$ row of matrix $X$ that holds the coordinates of the location of vertex $v_k$ in the edited mesh, and $\alpha$ is a weight parameter that balances the constraints of mesh shape preservation (first term of the optimized function) and fidelity to the artist's edits (second term).

One can encode the editing constraints defined above in a similar fashion. Let $\Gamma_{a,b}(x)$ be a real-valued function defined as a function of the two parameters a and b as:

$$\begin{cases} \Gamma = (a-x)^2 & if & x < a \\ \Gamma = 0 & if & a < x < b \\ \Gamma = (x-b)^2 & if & x > b \end{cases} \tag{11}$$

A graphical representation of this function $\Gamma_{a,b}(x)$ is shown on **figure 6.**

In order to impose vertex displacement constraints when a set of vertices $\{v_k\}$ of mesh $M$ are moved to new

locations {$v'_k$} by the artist, the matrix $\textbf{\textit{V}}^*$ containing the locations of the vertices of the edited mesh is computed as:

$$\textbf{\textit{V}}^* = arg\,min_X\left[\|L_M\textbf{\textit{X}} - L_M\textbf{\textit{V}}\|^2 + \alpha\sum_k\|x_k - \textbf{\textit{v}}'_k\|^2 + \right.$$

$$\left.\beta\sum_{k=1}^{n}\sum_{j=1}^{3}\Gamma_{A_{j,v_k}^M,\,B_{j,v_k}^M}\left[\left(x_{k,j} - \textbf{\textit{v}}_{k,j}\right).\textbf{\textit{d}}_{j,v_i}^M\right]\right] \qquad (12)$$

When none of the components $v'_{k,j}$ - $\textbf{\textit{v}}_{k,j}$ of the displacement in the $j^{th}$ direction at vertex $\textbf{\textit{v}}_k$ exceeds their prescribed extremal values $A^M_{j,\textbf{\textit{vk}}}$ and $B^{Mj}_{j,\textbf{\textit{vk}}}$ defined by equation (9), all $\Gamma(.)$ terms are 0 and equation (12) comes down to equation (10), which is the standard formulation of Laplacian editing without vertex displacement constraints, as described above. When at least one of the displacement components exceeds its prescribed extremal values, the second term in equation (12), weighted by $\beta$, becomes non-zero, and penalizes the displacement away from its prescribed limits, drawing the edited vertex closer to the location corresponding to its maximum allowed displacement.

The weighting parameters $\alpha$ and $\beta$ in equation (12) balance the relative contributions of the constraints imposed on the editing. The higher $\alpha$, the closer the edited vertices in the final mesh $\textbf{\textit{V}}^*$ are to the locations {$v'_k$} specified by the artist, at the detriment of the preservation of the shape of the original mesh. The higher $\beta$, the more vertex displacement constraints are enforced.

Assuming the widely used cotangent formula, presented and explained for example in the book "Polygon Mesh Processing" by B. Levy et al., A.K. Peters Ed., 2010, is chosen for the discretization of the Laplace-Beltrami operator, the preferred values for parameters $\alpha$ and $\beta$ in equation (12) are respectively *1.0* and *1.0*.

**Figure 5** illustrates an exemplary apparatus 50 for sculpting a 3D model according to an embodiment of the present disclosure. Such an apparatus is configured to implement the method for sculpting a 3D model according to the present principles that has been described here above with reference to **figures 1 to 4.**

In the example shown in **figure 5,** the apparatus 50 comprises a processing unit PROC equipped for example with a processor and driven by a computer program PG stored in a memory MEM and implementing the method for sculpting a 3D model according to the present principles.

The processing unit PROC of the apparatus 50 is configured to:

-    receive a deformation to be applied to a template 3D model,
-    in response to the deformation to be applied to the template 3D model, executing at least one action on at least the template 3D model or a reference 3D model, the at least one action using a set of dependency data between the reference 3D model and the template 3D model.

According to an embodiment of the present disclosure, the processing unit PROC is further configured to determine the set of dependency data between the reference 3D model and the template 3D model.

At initialization, the code instructions of the computer program PG are for example loaded into a RAM (not shown) and then executed by the processor of the processing unit PROC. The processor of the processing unit PROC implements the steps of the method for sculpting a 3D model which has been described here above, according to the instructions of the computer program PG.

The apparatus 50 comprises an input unit (IN) which a user can use for interacting with the apparatus 50. When the user wants to sculpt the template 3D model, the input unit IN is used by the user to send deformation data representative of a deformation to be applied to the template 3D model. The input unit IN is thus configured for receiving such deformation data from the user. The processor PROC is configured to cooperate with the input unit (IN) for receiving from the input unit IN the deformation data and processing the deformation data according to any one of the embodiments disclosed above.

The apparatus 50 comprises a display unit DISP configured to display at least the template 3D model. For instance, the display unit DISP is a screen. The processor PROC of the apparatus 50 is configured to cooperate with the display unit for displaying the template 3D model being edited by the user. The display unit DISP may be configured also to display the reference 3D model.

According to an embodiment of the present disclosure, the display unit DISP and the input unit IN may be comprised in a same unit, for instance in a touch screen of a mobile device.

According to an embodiment of the present disclosure, the apparatus 50 comprises an output unit (OUT) for outputting information representative of a geometric difference between the template 3D model and the reference 3D model. Such an output unit is configured for outputting audio signal or visual signal. According to a particular embodiment of the present disclosure, the output unit OUT is comprised in the display unit DISP.

Optionally, the apparatus 50 comprises a communications unit COM configured for receiving from a network or a connected device, a set of dependency data between the reference 3D model and the template 3D model, for receiving the template 3D model and the reference 3D model. The communication unit COM may also be configured for transmitting the template 3D model through a communication network.

According to an embodiment of the present disclosure, the apparatus 50 is comprised in a mobile device, such as a mobile telephone, a smartphone, a digital tablet, a laptop...

## Claims

1. A method for sculpting a template 3D model comprising:

   - receiving (12) a deformation to be applied to said template 3D model,
   - in response to said deformation to be applied to said template 3D model, executing (13) at least one action on at least said template 3D model or a reference 3D model, said at least one action using a set of dependency data between said reference 3D model and the template 3D model.

2. The method for sculpting a template 3D model according to claim 1, further comprising determining said set of dependency data between said reference 3D model and the template 3D model.

3. The method for sculpting a template 3D model according to any one of claims 1 or 2, wherein the template 3D model and the reference 3D model are 3D meshes.

4. The method for sculpting a template 3D model according to any one of claims 2 or 3 wherein determining a set of dependency data comprises:

   - assigning point correspondences between the reference 3D model and the template 3D model,
   - generating dense surface correspondence between the reference 3D model and the template 3D model using said assigned point correspondences,
   - computing the set of dependency data using at least the dense surface correspondence.

5. The method for sculpting a template 3D model according to any one of claims 1 to 4 wherein executing said at least one action comprises:

   - applying said deformation to said template 3D model,
   - outputting an information representative of a geometric difference between said template 3D model and said reference 3D model, said geometric difference being determined using said set of dependency data.

6. The method for sculpting a template 3D model according to claim 5 wherein outputting an information representative of said geometric difference comprises displaying a visual feedback on said template 3D model or said reference 3D model.

7. The method for sculpting a template 3D model according to claim 6 wherein outputting an information representative of said geometric difference comprises computing said geometric difference as a geometric error metric, said visual feedback corresponding to a color map representative of computed values of said geometric error metric.

8. The method for sculpting a template 3D model according to claim 6 wherein said visual feedback is displayed as a 3D relief structure rendered on the template 3D model, said 3D relief structure being representative of vertices for said reference 3D model transferred to said template 3D model using said set of dependency data.

9. The method for sculpting a template 3D model according to any one of claims 1 to 4 wherein executing said at least one action comprises applying said deformation to said template 3D model using said set of dependency data.

10. The method for sculpting a template 3D model according to claim 9 wherein applying said deformation to said template 3D model using said set of dependency data comprises:

    - determining displacement limits from said set of dependency data,
    - limiting vertices displacement of said template 3D model in function of said displacement limits.

11. The method for sculpting a template 3D model according to claim 10, wherein when said deformation leads to vertices of said template 3D model positioned beyond said displacement limits, limiting vertices displacement of said template 3D model comprises redirecting a user applying said deformation to said template 3D model to choose a different deformation.

12. The method for sculpting a template 3D model according to claim 10, wherein, when said deformation leads to vertices of said template 3D model positioned beyond said displacement limits, displacement of vertices of the template 3D model is adjusted using a weight parameter applied to said displacement of vertices.

13. The method for sculpting a template 3D model according to any one of claims 1 to 12, wherein said reference 3D model is obtained from a 3D scan of an object or said reference 3D model is built from at least one photograph of an object.

14. The method for sculpting a template 3D model according to any one of claims 1 to 13, wherein executing at least one action on at least said template 3D model or said reference 3D model is performed in real time when a user is sculpting said template 3D model.

15. An apparatus for sculpting a template 3D model comprising:

   - means (IN) for receiving a deformation to be applied to said template 3D model,
   - means (PROC) for executing at least one action on at least said template 3D model or said reference 3D model, said at least one action using said set of dependency data, on response of said deformation,

   said apparatus being advantageously a mobile apparatus.

16. A computer program comprising software code instructions for performing the method according to any one of claims 1 to 14, when the computer program is executed by a processor.

Building reference
3D model
— 10

Obtaining
dependency data
— 11

Receiving
deformation data
— 12

Executing at least
one action using
dependency data
— 13

FIG. 1

Assigning point
correspondences
— 110

Generating dense
surface
correspondence
— 111

Computing
dependency data
— 112

FIG. 2

FIG. 3

FIG. 5

```
          ┌─────────────────────┐
   11      │     Determining     │
          │   dependency data   │
          └─────────────────────┘
                    │
                    ▼
          ┌─────────────────────┐
          │     Receiving       │  12
          │  deformation data   │
          └─────────────────────┘
                    │
                    ▼
   13   ┌───────────────────────────────────────────┐
        │  Applying deformation using dependency data│
        │         ┌──────────────────────┐ 134       │
        │         │    Determining       │           │
        │         │ displacement limits  │           │
        │         └──────────────────────┘           │
        │                  │                         │
        │                  ▼                         │
        │            ◇ Displacement vertices  135    │
        │              beyond displacement           │
        │              limits ?                       │
        │        No  /            \  Yes             │
        │           ▼              ▼                 │
        │  ┌──────────────┐  ┌──────────────┐ 136    │
        │  │Applying vertices│ │Limiting vertices│    │
        │  │ displacement │  │ displacement │        │
   137  └──┴──────────────┴──┴──────────────┴────────┘
```

FIG. 4

FIG. 6

**EP 3 330 927 A1**

Europäisches
Patentamt

European
Patent Office

Office européen
des brevets

# EUROPEAN SEARCH REPORT

Application Number

EP 16 30 6615

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/105126 A1 (PIXAR [US]; DEROSE TONY [US]; MEYER MARK [US]; BAKSHI SANJAY [US]; SAN) 27 August 2009 (2009-08-27)<br>* paragraphs [0002], [0007], [0008], [0011], [0013] *<br>* paragraph [0015] - paragraph [0016] *<br>* paragraphs [0018], [0019], [0047] *<br>* paragraph [0052] - paragraph [0055] *<br>* paragraph [0057] - paragraph [0063] *<br>* paragraphs [0065], [0067] *<br>* paragraphs [0069], [0070], [0072] *<br>* paragraph [0083] - paragraph [0084] *<br>* paragraph [0088] - paragraph [0089] *<br>* paragraphs [0092], [0096], [0097] *<br>* paragraph [0123] - paragraph [0126] *<br>* paragraph [0128] - paragraph [0141] *<br>* figures 1-4,6,11,16,17-120 *<br>----- | 1-16 | INV.<br>G06T17/20<br>G06T19/20 |
| X | US 8 847 963 B1 (COMET MICHAEL [US] ET AL) 30 September 2014 (2014-09-30)<br><br>* figures 1,2,7 *<br>* column 4, line 54 - line 57 *<br>* column 5, paragraphs 2,4,5 - column 6 *<br>* column 7, paragraphs 2,5 *<br>* column 9, paragraphs 1,2 *<br>* column 9, last paragraph - column 10, line 36 *<br>* column 11, paragraph 2 - column 12, paragraph 2 *<br>----- <br>-/-- | 1-6, 8-12,15, 16 | TECHNICAL FIELDS SEARCHED (IPC)<br>G06T |

The present search report has been drawn up for all claims

| Place of search | Date of completion of the search | Examiner |
|---|---|---|
| Berlin | 5 May 2017 | Gauthier, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 6

16

Europäisches
Patentamt

European
Patent Office

Office européen
des brevets

# EUROPEAN SEARCH REPORT

Application Number

EP 16 30 6615

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | SORKINE O ET AL: "Laplacian surface editing", PROCEEDINGS OF THE FOURTH EUROGRAPHICS SYMPOSIUM ON GEOMETRY PROCESSING ACM; INTERNATIONAL CONFERENCE PROCEEDING SERIES; SARDINIA, ITALY, JUNE 26 - 28, 2006, EUROGRAPHICS ASSOCIATION, SWITZERLAND, 8 July 2004 (2004-07-08), pages 175-184, XP058177427, ISSN: 1727-8384, DOI: 10.1145/1057432.1057456 ISBN: 978-3-905673-13-5 * section 2 "related work"; page 176, paragraphs 2,4 * * section 4 "mesh editing"; page 178, right-hand column, paragraph 1 - paragraph 3 * * section 5 "coating transfer"; page 179, left-hand column - page 184, left-hand column, last paragraph * * section 8 "conclusions"; page 183, paragraphs 1,2 * * figures 1,2,4,5,7 * -----  -/-- | 1-6,9, 10,13-16 | |

|  | | | TECHNICAL FIELDS SEARCHED (IPC) |

The present search report has been drawn up for all claims

| Place of search | Date of completion of the search | Examiner |
|---|---|---|
| Berlin | 5 May 2017 | Gauthier, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

**EUROPEAN SEARCH REPORT**

Application Number

EP 16 30 6615

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SILVA S ET AL: "POLYMECO - A Polygonal Mesh Comparison Tool", INFORMATION VISUALISATION, 2005. PROCEEDINGS. NINTH INTERNATIONAL CONFERENCE ON LONDON, ENGLAND 06-08 JULY 2005, PISCATAWAY, NJ, USA,IEEE, 6 July 2005 (2005-07-06), pages 842-847, XP010836424, ISBN: 978-0-7695-2397-2 * section 1 "introduction"; page 842, left-hand column, line 1, paragraph 2 - line 7 * * page 843, left-hand column, paragraph 1 * * section 3 "figures of merit"; page 843, left-hand column, paragraph 1 * * section 3.2 "difference measures"; page 844, left-hand column * * section "colored model"; page 844, right-hand column * * section 5 "visualization and interaction"; page 845, right-hand column, paragraph 1 - page 846, left-hand column, paragraph 1 * * figures 2,4 * ----- | 5-8 | |
| X  A | US 2009/066703 A1 (STYLES ANDREW GRAHAM [US]) 12 March 2009 (2009-03-12) * figures 1,2 * * paragraphs [0006], [0032], [0034] * * paragraph [0036] - paragraph [0041] * * paragraphs [0044], [0062] * ----- -/-- | 1,3,9, 15,16 10-12 | |

TECHNICAL FIELDS
SEARCHED (IPC)

The present search report has been drawn up for all claims

| Place of search | Date of completion of the search | Examiner |
|---|---|---|
| Berlin | 5 May 2017 | Gauthier, J |

EPO FORM 1503 03.82 (P04C01)

Europäisches
Patentamt

European
Patent Office

Office européen
des brevets

# EUROPEAN SEARCH REPORT

Application Number

EP 16 30 6615

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KOLJA KÄHLER ET AL: "Head shop", ACM SIGGRAPH SYMPOSIUM ON COMPUTER ANIMATION. SAN ANTONIO, TX, JULY 21 - 22, 2002; [ACM SIGGRAPH SYMPOSIUM ON COMPUTER ANIMATION], ACM, NEW YORK, NY, 21 July 2002 (2002-07-21), pages 55-63, XP058171515, DOI: 10.1145/545261.545271 ISBN: 978-1-58113-573-2 * page 55, right-hand column, paragraph 3 * <br> * section 3 "the reference head model"; page 56, right-hand column - page 57, left-hand column * <br> * section 4.4 "skin shading"; page 57, right-hand column * <br> * section 5.1 "setting up the warp function"; page 58, left-hand column * <br> * section "deforming the head structure"; page 58, right-hand column * <br> * page 59, left-hand column * <br> * section 6.1 "specifying landmarks"; page 59, right-hand column, line 1, paragraph 1 - line 2 * <br> * section 7.1 "landmark measurements"; page 61, left-hand column - right-hand column * <br> * figures 1-3,6 * <br> * Color plates; page 190 * <br> ----- <br> -/-- | 1-3,13, 15,16 | |

TECHNICAL FIELDS
SEARCHED      (IPC)

The present search report has been drawn up for all claims

| Place of search | Date of completion of the search | Examiner |
|---|---|---|
| Berlin | 5 May 2017 | Gauthier, J |

EPO FORM 1503 03.82 (P04C01)

Europäisches
Patentamt

European
Patent Office

Office européen
des brevets

**EUROPEAN SEARCH REPORT**

Application Number

EP 16 30 6615

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ROBERT W SUMNER ET AL: "Deformation transfer for triangle meshes", ACM TRANSACTIONS ON GRAPHICS (TOG), ACM, US, vol. 23, no. 3, 1 August 2004 (2004-08-01) , pages 399-405, XP058213692, ISSN: 0730-0301, DOI: 10.1145/1015706.1015736 * section 1 "introduction"; page 399, right-hand column, paragraph 2 - page 400, left-hand column, paragraph 1 * * section 2 "background"; left-hand column, paragraphs 1,4 * * section 3 "deformation transfer"; page 400, right-hand column, paragraph 1 * * section 3 "deformation transfer"; page 401, left-hand column, paragraph 2 - paragraph 4 * * section 4 "vertex formulation"; page 401, right-hand column, paragraph 1 * * section 5 "correspondence"; page 402, left-hand column, paragraphs 1,2 * * section 5 "correspondence"; page 402, right-hand column, last paragraph * * section 7 "conclusion"; page 403, right-hand column, paragraph 1 - paragraph 3 * * figures 2,4,6,7 * | 1-4,15, 16 | |

-----

-/--

TECHNICAL FIELDS
SEARCHED      (IPC)

The present search report has been drawn up for all claims

| Place of search | Date of completion of the search | Examiner |
|---|---|---|
| Berlin | 5 May 2017 | Gauthier, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 16 30 6615

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KENSHI TAKAYAMA ET AL: "GeoBrush: Interactive Mesh Geometry Cloning", COMPUTER GRAPHICS FORUM, vol. 30, no. 2, 28 April 2011 (2011-04-28), pages 613-622, XP055222563, GB ISSN: 0167-7055, DOI: 10.1111/j.1467-8659.2011.01883.x * the whole document * ----- | 1-16 | |

TECHNICAL FIELDS
SEARCHED      (IPC)

The present search report has been drawn up for all claims

| Place of search | Date of completion of the search | Examiner |
|---|---|---|
| Berlin | 5 May 2017 | Gauthier, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 16 30 6615

This annex lists the patent family members relating to the patent documents cited in the above-mentioned European search report.
The members are as contained in the European Patent Office EDP file on
The European Patent Office is in no way liable for these particulars which are merely given for the purpose of information.

05-05-2017

| Patent document cited in search report | | Publication date | Patent family member(s) | | Publication date |
|---|---|---|---|---|---|
| WO 2009105126 | A1 | 27-08-2009 | EP<br>NZ<br>WO | 2260403 A1<br>587503 A<br>2009105126 A1 | 15-12-2010<br>27-09-2013<br>27-08-2009 |
| US 8847963 | B1 | 30-09-2014 | NONE | | |
| US 2009066703 | A1 | 12-03-2009 | US<br>US | 2007030265 A1<br>2009066703 A1 | 08-02-2007<br>12-03-2009 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **R. W. SUMNER ; J. POPOVIC.** Deformation Transfer for Triangle Meshes. *ACM Transactions on Graphics,* 2004, vol. 23 (3
- **O. SORKINE et al.** Laplacian Surface Editing. *the proceedings of the 2004 Eurographics / ACM SIGGRAPH Symposium on Geometry Processing,* 2004
- **B. LEVY et al.** Polygon Mesh Processing. 2010